(19) **Europäisches Patentamt / European Patent Office / Office européen des brevets**

(11) **EP 2 436 653 A1**

(12) **EUROPÄISCHE PATENTANMELDUNG**

(43) Veröffentlichungstag:
04.04.2012 Patentblatt 2012/14

(21) Anmeldenummer: 11178830.3

(22) Anmeldetag: 25.08.2011

(51) Int Cl.:
*C02F 1/44* (2006.01)     *B01D 61/22* (2006.01)
*B01D 65/02* (2006.01)     *B01D 65/10* (2006.01)
*C02F 103/02* (2006.01)

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(30) Priorität: 30.09.2010 DE 102010041826

(71) Anmelder: Krones AG
93073 Neutraubling (DE)

(72) Erfinder:
• Scheu, Dirk, Dipl.-Ing.
86735 Amerdingen (DE)
• Link, Albert, Dipl.-Ing.
84072 Au i.d.H. (DE)

(74) Vertreter: Grünecker, Kinkeldey,
Stockmair & Schwanhäusser
Anwaltssozietät
Leopoldstrasse 4
80802 München (DE)

(54) **Verfahren und Vorrichtung zum Herstellen von gefilterten Flüssigkeiten**

(57) Bei einem Verfahren zum Herstellen von gefilterter Flüssigkeit, insbesondere Sterifwasser, in einer Filtrationsvorrichtung (V) mit mindestens einer Membraneinheit (4a-4b) während jeweils eines durch Membranen-Rückspülzyklen begrenzten Produktionszyklus jeder Membraneinheit (4a-4b) wird im Produktionsablauf ein jeweiliges Produktionsflüssigkeitsvolumen zumindest eines Produktionszyklus vor Freigabe zum Verbrauch zwischengespeichert, bis für das zwischengespeicherte Produktionsflüssigkeitsvolumen ein Sterilitätsnachweis erbracht worden ist. In der Vorrichtung ist jeder Membraneinheit (4a-4b) ein Membranen-Rückspülsystem (18) und eine Sterilluft-Testvorrichtung (16) für Membranen-Funktionsfähigkeitstests zugeordnet und wenigstens ein Zwischenspeicher (Z) nachgeschaltet, der ein Fassungsvermögen mindestens entsprechend dem bei dem Produktionszyklus anfallenden Produktionsflüssigkeitsvolumen aufweist.

FIG. 1

EP 2 436 653 A1

**Beschreibung**

Die Erfindung betrifft ein Verfahren gemäß Oberbegriff des Patentanspruchs 1 sowie eine Vorrichtung gemäß Oberbegriff des Patentanspruchs 8.

Für verschiedene Funktionen und Prozesse, beispielsweise bei der Getränkeherstellung und in der Abfüll- und/ oder Verpackungstechnik, wird Sterilwasser benötigt. Sterilwasser wird aus Rohwasser häufig durch Anwenden einer UHT/KZE-Technologie produziert, d. h. durch thermisches Erhitzen des Rohwassers zur garantierten Abtötung von Mikroorganismen und anschließendes Abkühlen auf Verarbeitungstemperatur. Dies ist ein außerordentlich energieaufwändiges und kostenintensives Verfahren. Allerdings ist es durch Temperaturüberwachung relativ einfach, die Funktionsfähigkeit der Produktionsanlage permanent sicherzustellen, damit im Fall einer Funktionsstörung kein kontaminiertes Sterilwasser zum Verbrauch freigegeben wird. Zur Einsparung von Energie und Kosten bietet sich als eine mögliche Alternative die Membrantechnologie zum Herstellen von Sterilwasser entsprechender Qualität und Güte an. Hierbei werden Membraneinheiten eingesetzt, durch welche das Rohwasser in Produktionszyklen gepumpt wird, wobei die Membranen wie Filter wirken und Mikroorganismen und Keime zurückhalten und damit mehr oder weniger steril machen. Die Membranen jeder Membraneinheit müssen beispielsweise in regelmäßigen Abständen rückgespült werden, wobei zwei aufeinanderfolgende Rückspülzyklen und Integritätstests den Produktionszyklus zeitlich begrenzen. Das Produktionsvolumen an Sterilwasser eines Produktionszyklus ist dann aber bereits zum Verbrauch freigegeben worden oder mit Produktionsvolumina anderer parallel arbeitender Membraneinheiten vermischt und zum Verbrauch freigegeben. Ein Nachteil der Membrantechnologie liegt jedoch darin, dass bis heute nicht wirtschaftlich online nachgewiesen werden kann, dass die Membranen während jedes Funktionszyklus funktionsfähig bleiben. Ein Membranenbruch oder eine Membranen-Funktionsstörung führt also während eines Produktionszyklus zu unzureichender Qualität und Güte des Sterilwassers, das dann bereits bei den Funktionen und Prozessen verbraucht worden sein kann, was aufwändige und kostenintensive Maßnahmen nach sich zieht. Denn eine solche Störung wird erst zu spät durch einen üblichen Membranenlntegritätstest nach dem Produktionszyklus festgestellt.

Aus EP 1 189 684 B und US 2003 015977 A ist ein Haushaltswasser-Trinkwasserspender bekannt, in welchem im Betriebsablauf Membranen-Funktionstests durchgeführt werden und bei Erbringen eines einen Membranenbruch oder eine Membranen-Funktionsstörung anzeigenden Resultats, die Produktion gestoppt wird. Der Membraneinheit ist ein kleines Reservoir nachgeschaltet, aus welchem das Trinkwasser verbraucht wird. Der Zweck des Reservoirs besteht darin, zum Verbrauch gleich ein größeres Produktionsvolumen und/oder genügend Trinkwasser für einen Rückspülzyklus verfügbar zu machen, da die Membraneinheit nur eine begrenzte Lieferleistung hat. Ein Verbrauch von kontaminiertem Trinkwasser lässt sich auf diese Weise nicht verhindern.

Ein ähnliches Problem tritt auf, wenn Apfelsaft, Bier etc. mit Mikrofiltrationsmembranen gefiltert bzw. geklärt wird. Wenn hier im Folgenden von "steril" die Rede ist, betrifft dies jeweils eine gewünschte Reinheit der gefilterten Flüssigkeit die aufgrund der Porengröße der eingesetzten Membran der Filtration zu erreichen sein soll.

Der Erfindung liegt die Aufgabe zugrunde, ein Verfahren der eingangs genannten Art sowie eine zur Durchführung des Verfahrens geeignete Vorrichtung mit Selbstüberwachung der Einhaltung der Sterilität (Filterqualität) der Flüssigkeit anzugeben, um durch Verbrauch an kontaminierter Flüssigkeit bedingte Nachfolgemaßnahmen vermeiden zu können.

Die gestellte Aufgabe wird den Merkmalen des Anspruchs 1 und den Merkmalen des Anspruchs 8 gelöst.

Da verfahrensgemäß für die jeweilige Membraneinheit im Produktionsablauf und in Verbindung mit einem Rückspülzyklus nach einem Produktionszyklus ein Sterilitätsnachweis erbracht wird, jedoch das Produktionsflüssigkeitsvolumen bis zum Erbringen des Sterilitätsnachweises noch nicht zum Verbrauch freigegeben, sondern zwischengespeichert wird, ist sichergestellt, dass bei Auftreten eines Membranbruchs oder einer Membranen-Funktionsstörung zwischen aufeinanderfolgenden Integritätstest produziertes, kontaminiertes Sterilwasser noch nicht zum Verbrauch freigegeben ist, sondern zuvor mit vertretbarem Kosten- und Energieaufwand verworfen werden kann. Durch die erbrachten Sterilitätsnachweise und die Zwischenspeicherung vor dem Verbrauch hat das Verfahren bei Anwendung der kosten- und energieoptimierten Membrantechnologie in einer Mikrofiltrationsvorrichtung oder einer Ultrafiltrationsvorrichtung das zur Gewährleistung der Sterilität beim Verbrauch wichtige Selbstüberwachungsmerkmal.

Die Kombination der Filtrationsvorrichtung mit dem Rückspülsystem, einer Sterilluft-Testvorrichtung für die Membranen-Funktionsfähigkeit der jeweiligen Membraneinheit, und dem Zwischenspeicher mit vorbestimmtem Fassungsvermögen sichert selbstüberwachend die Einhaltung der Sterilität. Zumindest das Fassungsvermögen und gegebenenfalls die Strukturierung des Zwischenspeichers gewährleisten, dass kontaminiertes Sterilwasser aus dem Produktionsablauf dann noch nicht dem Verbrauch zugeführt werden konnte, wenn sich die Membranen-Funktionsfähigkeit nicht bestätigen ließ. Allenfalls zwischen zwei aufeinanderfolgenden Rückspülzyklen und Membranen-Funktionsfähigkeitstests (Integritätstest) produziertes, kontaminiertes Sterilwasser ist zu verwerfen. Gegebenenfalls wird dann ein Reinigungszyklus vorgenommen, der den Zwischenspeicher, jedoch keinen Verbraucher einzubeziehen braucht, und deshalb nur eine kurze Produktionsunterbrechung bedingt.

Verfahrensgemäß wird nach jedem Rückspülzyklus einer Membraneinheit ein Membranen-Funktionstest durchgeführt. Vor jedem Membranen-Funktionstest produzierte Flüssigkeit wird zwischengespeichert und erst dann zum Verbrauch freigegeben, nachdem ein positives Resultat des Membranen-Funktionstests vorliegt und somit der Sterilitätsnachweis für den Produktionszyklus erbracht worden ist.

Zweckmäßig wird verfahrensgemäß der Membranen-Funktionstest als Bubble-Point-Test mit unter Druck gesetzter Sterilluft durchgeführt, die nach dem Rückspülzyklus, gegebenenfalls bei entleerter Membraneinheit, eingeführt wird. Vorzugsweise wird bei dem Bubble-Point-Test eine Druck- und/oder Mengenmessung der Sterilluft relativ zu einer Referenz über die Zeit vorgenommen, bei dem festgestellt wird, wie die eingeführte Sterilluft sich in der Membraneinheit verhält. Beispielsweise wird die Sterilluft mit einem Druck von etwa 1 bar, d.h. unterhalb des Blasenbildungsdruckwerts der Membranen, eingeführt. Es wird festgestellt, ob die Durchströmung bzw. der Druckabfall beispielsweise ein vorbestimmtes Zeitfenster nicht unterschreitet. Mittels des Bubble-Point-Tests lässt sich so eine Membranen-Funktionsstörung oder ein Membranenbruch rasch und mit vertretbarem Aufwand ermitteln, der dann als Anlass zum Abschalten des Produktionsablaufs zumindest der betroffenen Membraneinheit genommen werden kann. Der Bubble-Point-Test kann routinemäßig in Verbindung mit dem Rückspül-Zyklus automatisiert veranlasst und ausgewertet werden, um im Produktionsablauf den selbstüberwachenden Sterilitätsnachweis zu erbringen.

Um im Produktionsablauf eine geforderte Nennleistung zu erzielen, ist es verfahrensgemäß ferner zweckmäßig, mehrere parallele, sich gegebenenfalls überlappende Produktionszyklen in mehreren parallelen Membraneinheiten durchzuführen. In diesem Fall werden sequenziell Sterilitätsnachweise für die Produktionszyklen erbracht und wird bis zum Erbringen des jeweiligen Sterilitätsnachweises die Summe der bis dahin angefallenen Produktionsvolumina zwischengespeichert. Auf diese Weise kann zwar nicht ausgeschlossen werden, dass Produktionsvolumina beispielsweise an einwandfreiem Sterilwasser durch ein Produktionsvolumen an kontaminierten Sterilwasser kontaminiert oder zumindest teilweise kontaminiert werden. Jedoch wird dank der Zwischenspeicherung verhindert, dass z.B. kontaminiertes Sterilwasser als filtrierte Flüssigkeit zum Verbrauch freigegeben wird.

Bei einem negativen Resultat eines durchgeführten Membranen-Funktionstests wird zumindest der Inhalt des Zwischenspeichers verworfen, da das negative Resultat für einen Membranenbruch oder eine Membranen-Funktionsstörung spricht. Die Membranen lassen dann nämlich die Sterilluft zu schnell oder in zu großer Menge pro Zeiteinheit durch, was leicht zu ermitteln ist. Vorzugsweise wird anschließend gleich ein Reinigungszyklus durchgeführt, der zumindest den Zwischenspeicher und die Verrohrung bis zu der fehlerhaften Membraneinheit einbezieht. Die dadurch notwendige Unterbrechung des Produktionsablaufs kann relativ kurz sein, wobei entscheidend ist, dass keine kontaminierte Flüssigkeit unkontrolliert zum Verbrauch freigegeben wurde.

Der Produktionsablauf wird zweckmäßig kontinuierlich oder in aufeinander folgenden Chargen intermittierend gesteuert. Bei kontinuierlichem Produktionsablauf und mit nur einem Zwischenspeicher ausreichenden Fassungsvermögens kann Rohwasser mit einer einzigen Rohwasser-Pumpstation durch die gesamte, mehrere Membraneinheiten in Parallelschaltung aufweisende Filtrationsvorrichtung gefördert werden. Diese Rohwasser-Pumpstation fördert beispielsweise Rohwasser mit einem Druck von etwa 7 bar zu den Membraneinheiten, und pumpt erzeugtes Sterilwasser beispielsweise etwa 6 bar weiter in und durch den Zwischenspeicher. Bei intermittierendem Betrieb (Batch-Prinzip) mit nachgeschaltetem Zwischenspeicher würde der Zwischenspeicher erst nach erbrachtem Sterilitätsnachweis freigegeben und geöffnet. Der Zwischenspeicher könnte auch dann erst wieder befüllt werden. In diesem Fall werden zweckmäßig mehrere Rohwasserpumpen eingesetzt.

Zweckmäßig wird ferner der Produktionszyklus einer jeweiligen von mehreren parallel geschalteten Membraneinheiten zumindest auf eine Zeitdauer eingestellt, während der sequenziell, sozusagen reihum, in den weiteren Membraneinheiten Rückspülzyklen durchführbar und Sterilitätsnachweise erbringbar sind. Während des Produktionszyklus einer Membraneinheit werden in den anderen Membraneinheiten die Rückspülzyklen und Membranen-Funktionstests reihum durchgeführt, ohne dass zwischengespeichertes, kontaminiertes Sterilwasser verbraucht werden kann. Ausnahmen, wie eventuell früher erforderliche Rückspülzyklen in einzelnen Membraneinheiten können diesen Betriebsablauf durch einen steuerungsseitig vorgesehenen, bestimmten Überhang oder Toleranzbereich nicht aus dem Gleichgewicht bringen. Solche früher erforderlichen Rückspülzyklen könnten zum Anlass genommen werden, auch zur Sicherstellung der erforderlichen Nennleistung an Sterilwasser eine Großreinigung vorzunehmen, weil sie ein Indiz für allgemein nachlassende Leistungsfähigkeit sind.

Um mit der Filtrationsvorrichtung eine relativ hohe Nennleistung zu erzielen, sind mehrere parallele Membraneinheiten vorgesehen und an eine Rohwasser-Pumpstation und den Zwischenspeicher abgeschlossen. Das Fassungsvermögen des Zwischenspeichers entspricht zumindest der Summe der Produktionsvolumina aller Membraneinheiten während des Produktionszyklus einer jeweiligen Membraneinheit, oder zumindest der Summe der Produktionsvolumina derjenigen Membraneinheiten, an denen gerade kein Membranen-Funktionstest durchgeführt wird. Vorzugsweise entspricht sicherheitshalber das Fassungsvermögen des Zwischenspeichers sogar der Summe der Produktionsvolumina aller Membraneinheiten für die Zeitdauer des Produktionszyklus einer jeweiligen Membraneinheit zuzüglich der Zeitdauer eines Rückspülzyklus und eines in Verbindung mit dem Rückspülzyklus ausgeführten Membranenfunktions-Tests zum Erbringen des Sterilitätsnachweises für diese Membraneinheit. Das Fassungsvermögen des Zwischenspeichers kann alternativ auch etwas kleiner bemessen werden, wenn der Zwischenspeicher so ausgebildet ist, dass er eine vorbestimmte Schichtung für das erzeugte Sterilwasser sicherstellt, dank derer kontaminiertes nachgeschobenes Sterilwasser oder dessen Wasserfront nicht bis in in Verbrauchernähe positionierte Schichten mit nicht kontaminiertem Sterilwasser vordringt. Denn das Produktionsvolumen aus dem Produktionszyklus der funktionsgestörten Membraneinheit ist dann eines der letzten im Zwischenspeicher, während die zuvor eingebrachten Produktionsvolumina nicht kontaminiertes Sterilwasser enthalten.

Zweckmäßig ist die Sterilluft-Testvorrichtung für die Membranen-Funktionsfähigkeit so ausgebildet, dass mit der Sterilluft, die unter Druck in die jeweilige Membraneinheit eingeführt wird, ein Bubble-Point-Test durchführbar ist, der relativ rasch entweder den Sterilitätsnachweis erbringt, so dass der Produktionsablauf unverändert fortgeführt werden kann, oder eine Membranen-Funktionsstörung meldet, die als Anlass zum Abbrechen des Produktionsablaufs genommen werden kann.

Bei einer zweckmäßigen Ausführungsform ist der Zwischenspeicher ein Tank mit dem erforderlichen Fassungsvermögen. Der Tank kann ein einfacher Tank ohne jegliche Einbauten sein. Vorzugsweise ist der Tank mit einem unten liegenden Zulauf und einem oben liegenden Ablauf ausgebildet. Zweckmäßig sind sogar Einbauten im Tank vorgesehen, wie Zulauftöpfe und/oder Leitbleche, um eine vorbestimmte Sterilwasserschichtung zwischen Zu- und Ablauf zu erzwingen.

Alternativ kann der Zwischenspeicher zumindest eine Rohrschlange umfassen.

Bei einer weiteren, zweckmäßigen Ausführungsform umfasst der Zwischenspeicher zumindest zwei Teilspeicher, beispielsweise in Form von Tanks oder Rohrschlangen, in die bei der Filtration produzierte Flüssigkeit, z.B. Sterilwasser, wahlweise einbringbar ist. Zweckmäßig hat jeder Teilspeicher das erforderliche Fassungsvermögen, mit dem sicherstellbar ist, dass produziertes Sterilwasser erst zum Verbrauch freigegeben wird, wenn der Sterilitätsnachweis erbracht worden ist. Wenn dann ein Teilspeicher mit kontaminiertem Sterilwasser und die dafür verantwortliche Membraneinheit isoliert werden, kann die Produktionsanlage mit dem anderen Teilspeicher und integren Membraneinheiten weiter betrieben werden.

Grundsätzlich kann es, speziell für einen kontinuierlichen Betriebsablauf, zweckmäßig sein, die mehreren Membraneinheiten an eine gemeinsame einzige Rohwasser-Pumpe anzuschließen. Die Filtrationsvorrichtung lässt sich somit mit vertretbar geringem Energieaufwand betreiben.

Bei einem Zwischenspeicher, der mindestens zwei parallel geschaltete, wahlweise speisbare Teilspeicher aufweist, kann es zweckmäßig sein, eine Doppelverrohrung zwischen den Membraneinheiten und den Zwischenspeicher vorzusehen. Diese Doppelverrohrung enthält gegenseitige Querverbindungen und Umschaltorgane. Gegebenenfalls sind auch die Rückspülsysteme doppelt vorhanden, um aseptischen und Rekontaminations-Gesichtspunkten Rechnung zu tragen. Für den Fall, dass der Sterilitätsnachweis nicht erbracht werden konnte, wird der betroffene Teilspeicher entleert und auf den anderen Teilspeicher umgeschaltet. Mittels der Umschaltorgane und der gegenseitigen Querverbindungen kann dann sowohl für Rückspülzyklen als auch Produktionszyklen ein sicherer Strömungsweg eingestellt werden, während der kontaminierte Teilspeicher und die kontaminierten Verrohrungsabschnitte entleert und gereinigt werden.

Schließlich weist die Filtrationsvorrichtung zweckmäßig eine Produktionssteuer- und -Überwachungseinrichtung auf, die computerisiert sein kann, und zumindest an Funktionsüberwachungs-Sensoren an oder in der jeweiligen Membraneinheit angeschlossen ist. Über die Produktionssteuer- und -Überwachungseinrichtung können auch die Membranen-Funktionsfähigkeitstests gesteuert und ausgewertet werden, wie auch die Rückspülzyklen, und zwar zweckmäßig reihum bzw. sequenziell.

Anhand der Zeichnung werden Ausführungsformen des Erfindungsgegenstandes erläutert. Es zeigen:

Fig. 1    eine Schemadarstellung einer Ultrafiltrationsvorrichtung zur Produktion von Sterilwasser,

Fig. 2    schematisch eine größere Ultrafiltrations-Vorrichtung zur Verdeutlichung des Produktionsablaufs, und

Fig. 3    eine Schemadarstellung einer Detailvariante einer Ultrafiltrations-Vorrichtung.

Die Erfindung wird nachfolgend unter Hinweis auf eine Ultrafiltrationsvorrichtung zur Herstellung von Sterilwasser erläutert und beschrieben, die Ausführungen gelten aber gleichermaßen für die Membranfiltration im Allgemeinen und schließen insbesondere auch Mikrofiltrationsvorrichtungen mit ein, mit denen man z.B. Apfelsaft, Bier oder dergleichen filtriert bzw. klärt.

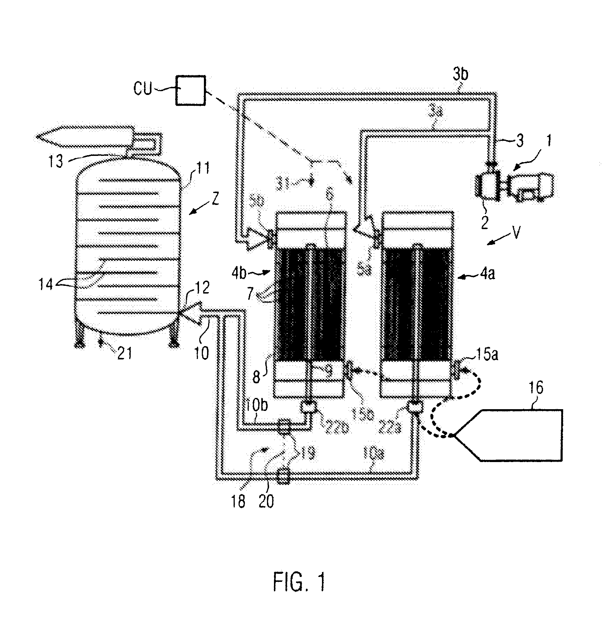

Eine Ultrafiltrations-Vorrichtung V in Fig. 1 umfasst als Hauptkomponenten eine Rohwasser-Pumpstation 1, zumindest eine Membraneinheit 4a oder 4b, im gezeigten Fall zumindest zwei parallel geschaltete Membraneinheiten 4a und 4b, und einen Zwischenspeicher Z für im Produktionsablauf hergestelltes Sterilwasser.

In der Rohwasser-Pumpstation 1 ist, beispielsweise für kontinuierlichen Produktionsablauf, eine einzige Rohwasser-Pumpe 2 vorgesehen, die Rohwasser über eine Verrohrung 3 und parallele Zweigleitungen 3a, 3b zu Zuläufen 5a, 5b der Membraneinheiten 4a, 4b pumpt. In jeder Membraneinheit 4a, 4b ist beispielsweise ein oberer gepotteter Zulauf 6 und ein tiefer liegender gepotteter Ablauf 8 mit dazwischen liegenden Membranen 7 vorgesehen, sowie ein zentrales Sammelrohr 9 für aus dem Rohwasser über die Membranen 7 produziertes Sterilwasser. Eine Durchströmung von oben nach unten ist nicht zwingend. Die Membranen 7 brauchen nicht notwendigerweise stehend verbaut zu sein (Alternativen: RO-Anlage, UF-Anlage mit Wickelmodulen).

Parallele Verrohrungen 10a, 10b verbinden die Sammelrohre 9 mit einer Rohrleitung 10, die zu einem Zulauf 12 des Zwischenspeichers Z führt. Der Zwischenspeicher Z ist beispielsweise ein Tank 11, der entweder ohne Einbauten ausgelegt, oder wie gezeigt, mit Einbauten 14, wie beispielsweise Zulauftöpfen (nicht gezeigt) oder Strömungsleitblechen ausge-stattet sein kann, die eine Schichtung des eingeführten Sterilwassers zwischen dem hier tief liegenden Zulauf 12 und einem oben platzierten Ablauf 13 erzwingen. Der Ablauf 13, der mit einem Absperrorgan versehen sein kann, ist z.B. mit nicht gezeigten Verbrauchern verbunden.

Eine weitere Ausstattungskomponente der Ultrafiltrations-Vorrichtung V ist eine gegebenenfalls gemeinsame Sterilluft-Testvorrichtung 16, mit der unter Überwachung des Drucks oder der Menge über die Zeit wahlweise zu einem Anschluss 15a, 15b jeder Membraneinheit 4a, 4b Sterilluft unter Druck, z. B. mit 1 bar, zum Durchführen eines Membranen-Funktionsfähigkeitstests zuführbar ist. Ferner ist ein Rückspülsystem 18 für jede Membraneinheit 4a, 4b vorgesehen, mit dem vor und nach einem Produktionszyklus in der jeweiligen Membraneinheit ein Rückspülzyklus ausführbar ist. In Verbindung mit einem Rückspülzyklus wird, zweckmäßig nach dem Rückspülzyklus und Entleerung der Membraneinheit, ein Membranen-Funktionsfähigkeitstest mittels der Sterilluft-Testvorrichtung 16 durchgeführt. In der gezeigten Ausführungsform wird jeder Rückspülzyklus mit Sterilwasser durchgeführt, das aus dem Produktionszyklus zumindest einer Membraneinheit 4a oder 4b stammt. Hierzu können zwischen den Rohren 10a, 10b Absperrorgane 19 und eine Bypassleitung 20 vorgesehen sein. Alternativ könnte auch ein eigenständiger Rückspülkreis für jede Membraneinheit 4a, 4b vorgesehen sein. Gegebenenfalls sind Absperrorgane 22a, 22b für jede Membraneinheit 4a, 4b vorgesehen, wie gegebenenfalls auch Absperrorgane an den Zuläufen 5a, 5b (nicht gezeigt). Der Tank 11 kann mit einem bodenseitigen Verwerfungs-Ablauf 21 ausgestattet sein. Ferner können die Membraneinheiten 4a, 4b, die Rohrleitungen 10a, 10b, 10 und der Tank 11 an ein nicht gezeigtes Reinigungssystem angeschlossen sein oder werden.

Ist nur eine Membraneinheit 4a oder 4b vorgesehen, dann hat der Zwischenspeicher Z ein Fassungsvermögen, das zumindest dem Produktionsvolumen eines Produktionszyklus der Membraneinheit 4a oder 4b entspricht. Arbeiten mehrere Membraneinheiten gleichzeitig, hat hingegen der Zwischenspeicher Z ein Fassungsvermögen entsprechend den Produktionsvolumina, die während eines Produktionszyklus anfallen, zuzüglich des Volumens an während eines Rückspülzyklus und des Membranen-Funktionsfähigkeitstests anfallendem Sterilwasser.

Der Filtrationsvorrichtung, hier z.B. der Ultrafiltrations-Vorrichtung, ist eine Produktionssteuerund -Überwachungseinrichtung CU zugeordnet, vorzugsweise eine computerisierte Einrichtung mit Eingabe- und Anzeigesektionen, die zumindest mit an oder in den Membraneinheiten 4a, 4b platzierten Funktionsüberwachungs-Sensoren 31 verbunden sein kann.

In der Ausführungsform in Fig. 1 ist ein kontinuierlicher Produktionsablauf möglich, mit nur einer einzigen Rohwasserpumpe 2, die das Rohwasser beispielsweise mit einem Druck von etwa 7 bar einspeist und durch den funktionsbedingten Druckverlust in den Membraneinheiten 4a, 4b Sterilwasser mit noch etwa 6 bar in den Zwischenspeicher Z fördert. Das in dem Zwischenspeicher Z zwischengespeicherte Sterilwasservolumen wird erst dann zum Verbrauch freigegeben, wenn ein Sterilitätsnachweis durch einen bestandenen Membran-Funktionsfähigkeitstest erbracht worden ist. Kann kein Sterilitätsnachweis erbracht werden, weil der Test z.B. auf einen Membranenbruch oder eine Membranen-Funktionsstörung hinweist, wird das zwischengespeicherte Sterilwasser nicht zum Verbrauch freigegeben, sondern verworfen, wird der Betriebsablauf unterbrochen, und wird, zweckmäßig, ein Reinigungszyklus oder eine Teilreinigung durchgeführt.

Zum Erbringen des Sterilitätsnachweises wird nach einem Rückspülzyklus, gegebenenfalls bei entleerter Membraneinheit 4a oder 4b und weiterhin laufendem Produktionszyklus jeder weiteren Membraneinheit 4a oder 4b Sterilluft eingespeist und wird gemessen (Bubble-Point-Test), wie sich der Druckabfall der Sterilluft oder deren eingespeiste Menge über die Zeit verhält. Es wird dabei ein vorbestimmtes Zeitfenster berücksichtigt. Wird dieses Zeitfenster unterschritten, z.B. weil sich der Sterilluft-Druck zu schnell abbaut oder die Sterilluft zu schnell durchströmt, dann wird dies als Indiz dafür genommen, dass ein Membranenbruch oder eine Membranen-Funktionsstörung vorliegt. Wird das Zeitfenster eingehalten, dann wird dies als erbrachter Sterilitätsnachweis verwertet und wird die getestete Membraneinheit wieder in Betrieb genommen. Verfahrensgemäß wird z.B. ermittelt, wo die Position der Front des Sterilwasserstroms am Beginn und beim Umschalten auf Rückspülzyklen liegt, wobei sichergestellt wird, dass die Front den Zwischenspeicher nicht verlässt, ehe nicht ein Sterilitätsnachweis erbracht worden ist. Das Sterilwasser darf den Zwischenspeicher nicht verlassen haben, bis für jede Membraneinheit zumindest der jeweils zweite Sterilitätsnachweis erbracht worden ist. Dies bedingt eine bestimmte Verweilzeit des produzierten Sterilwassers im Zwischenspeicher und eine entsprechende Dimensionierung des Zwischenspeichers. Der Zwischenspeicher könnte u.a. auch eine Rohrschlange sein.

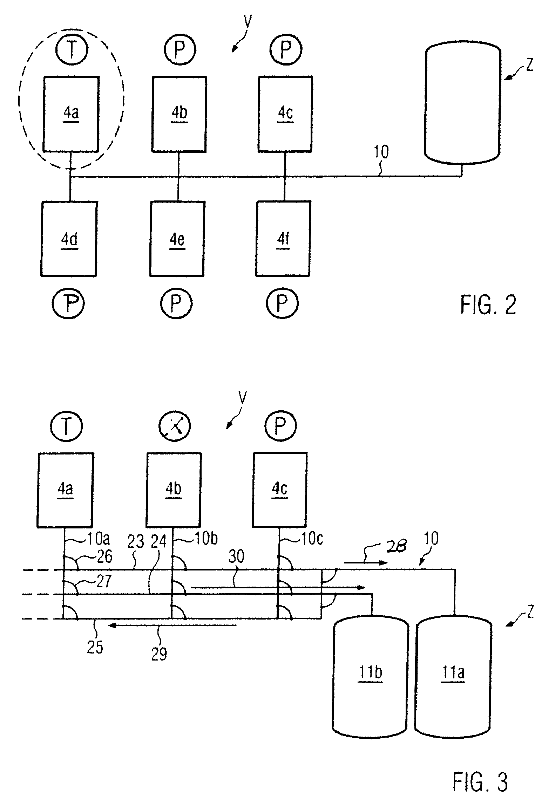

Für jede Membraneinheit gibt es vier verschiedene Betriebszustände (Fig. 2, Fig. 3):

T = T1 = Membranen-Funktionstest einer Membraneinheit vor einem Produktionszyklus (Rückspülzyklus + Membranen-Funktionstest + Produktionsvorbereitung)

X =         Vorbereitungszustand (d. h. die Membraneinheit ist intakt und in Wartestellung)

P =         Produktionszyklus

T = T2 =    Membranen-Funktionstest der Membraneinheit vor dem nächsten Produktionszyklus (Rückspülzyklus + Membranen-Funktionstest + Produktionsvorbereitung der Membraneinheit)

Da in der Regel nach T2 ein neuer Produktionszyklus abläuft, wird für diesen Fall T2 wieder zu T1.

Die maximale Gesamtverweilzeit des Sterilwassers in dem Zwischenspeicher Z für eine Ultrafiltrationsvorrichtung mit mindestens zwei parallelen Membraneinheiten 4a, 4b beträgt dann

$$t_{gesamt} = t_{Produktionszyklus} + t_{T2}.$$

Daraus ergibt sich bei einem maximalen Volumenstrom das Mindest-Fassungsvermögen des Zwischenspeichers mit

$$V_{Volumenzwischenspeicher} = \dot{V}_{max} \cdot t_{gesamt}.$$

Die Membran-Flächendimensionierung ergibt sich über

$$\dot{V} = Permeabilität \cdot Membranfläche,$$

und ist abhängig von der notwendigen überhängenden Produktion zu $t_{gesamt}$ und führt bei dem gezeigten Ausführungsbeispiel in Fig. 1 zu

$$\dot{V}_{Nennleistung / Netto} = \frac{1}{AnzahlMemraneinheiten} \cdot \dot{V}_{Gesamtleistung / Brutto}.$$

Beim gezeigten Ausführungsbeispiel in Fig. 1 und auch in der Ausführungsform in Fig. 2 mit beispielsweise sechs parallel dem Zwischenspeicher Z vorgeschalteten Membraneinheiten 4a-4f ist die Zeitdauer eines Produktionszyklus einer Membraneinheit so eingestellt, dass reihum in allen Membraneinheiten getestet und gespült werden kann. Ausnahmen durch eventuell früher erforderlich werdende Rückspülzyklen bei einzelnen Membraneinheiten (z. B. nach Feststellen nachlassender Filtrationsleistung oder unzulässig ansteigender Druckdifferenz) können den Betriebsablauf durch einen vorbestimmten Überhang nicht aus dem Gleichgewicht bringen. Solche früher als vorbestimmt erforderlich werdenden Rückspülzyklen können bei häufigerem Auftreten vielmehr als Anlass für eine Großreinigung und/oder in einen Membranenwechsel der Ultrafiltrations-Vorrichtung V genommen werden.

Grundsätzlich ist ein kontinuierlicher Betriebsablauf mit dem Vorteil zweckmäßig, mit einer einzigen Rohwasser-Pumpe 2 auszukommen, die Rohwasser beispielsweise mit etwa 7 bar einbringt und aufgrund des Druckverlusts in den Membraneinheiten 4a-4f beispielsweise Sterilwasser noch mit etwa 6 bar in bzw. durch den Zwischenspeicher Z fördert.

Alternativ könnte auch ein Batch-System mit wenigstens einem Zwischenspeicher zweckmäßig sein, das intermittierend in Chargen produziert. In diesem Fall würde der Zwischenspeicher erst nach bei T2 erbrachtem Sterilitätsnachweis freigegeben und geöffnet, und könnte er auch erst dann wieder befüllt werden. In diesem Fall wären bei mehreren Membraneinheiten mehrere Rohwasserpumpen erforderlich.

Bei der im Produktionsablauf angedeuteten Ultrafiltrations-Vorrichtung V in Fig. 2 mit z.B. sechs Membraneinheiten 4a-4f (oder Membranbänken) durchläuft beispielsweise die Membraneinheit 4a einen Membranen-Funktionsfähigkeitstest T, während die anderen Membraneinheiten 4b-4f ihre Produktionszyklen P ausführen. Es wird ab Beginn des Produktionsablaufs beispielsweise eine Förderleistung von etwa 10 m³/h Sterilwasser erzielt. Nach einer Zeitdauer von etwa beispielsweise 90 Minuten wird begonnen, reihum in jeder Moduleinheit 4a-4f einen Rückspülzyklus, und jeweils anschließend an den Rückspülzyklus einen Membranen-Funktionsfähigkeitstest durchzuführen. Der Rückspülzyklus und der Test dauern beispielsweise etwa 14 Minuten. Das heißt, im Produktionsablauf wird innerhalb der Produktionsstandzeit von beispielsweise 90 Minuten jede Membraneinheit einmal rückgespült und getestet und bei erbrachtem Sterilitätsnachweis wieder in den Produktionsprozess eingekoppelt, ehe zur nächsten Membraneinheit übergegangen wird, um diese rückzuspülen und zu testen. Dabei liegt ein Überhang von etwa 6 Minuten vor. Die Rückspülmenge kann direkt aus dem Produktionsvolumen anderer Membraneinheiten übernommen werden. Dies kann bedeuten, dass die Brutto-Produktionsleistung entsprechend der Rückspülmenge höher und regelbar ist, so dass immer die geforderte Nennleistung von beispielsweise 10 m³/h anfällt. Bei Bedarf kann alternativ flexibel die maximale Nennleistung reduziert werden. Ein negatives Resultat eines Membranen-Funktionsfähigkeitstests hat einen sofortigen Stopp des Produktionsablaufes zur Folge. Zweckmäßig werden dann der Zwischenspeicher Z wie auch die Verrohrungen entleert, und nachfolgend gereinigt.

Fig. 3 verdeutlicht eine Ausführungsform einer Ultrafiltrations-Vorrichtung V mit beispielsweise mindestens drei Membraneinheiten 4a-4c in Parallelschaltung und einer Verrohrung 10 zum Zwischenspeicher Z, der in Fig. 3 aus mindestens zwei wahlweise speisbaren Tanks 11a, 11b (oder Rohrschlangen, nicht gezeigt) besteht. Jeder Tank 11 a, 11 b hat ein Fassungsvermögen, das das Zwischenspeichern zumindest der Summe der Produktionsvolumina der Membraneinheiten 4a, 4c ermöglicht, die zwischen zwei aufeinanderfolgenden Tests produziert worden sind. In diesem Fall ist es zweckmäßig, die Verrohrung 10 mehrfach auszubilden, beispielsweise doppelt oder zweischienig, damit bei Feststellen einer Membranen-Funktionsstörung oder eines Membranenbruchs in einer Membraneinheit 4a-4c die weiterhin Sterilwasser produzierenden Membraneinheiten auf einen sicheren Strömungsweg umgeschaltet werden können. Die Inhalte der bis dahin benutzten Verrohrungsabschnitte und des einen Tanks 11a oder 11b können verworfen werden, ehe dort anschließend gereinigt wird.

Im in Fig. 3 gezeigten Fall sind parallele Verbindungsleitungen 23, 24 zu jeweils einem Tank 11 a, 11b vorgesehen, an die die Rohrleitungen 10a, 10b, 10c der Membraneinheiten 4a-4c angeschlossen sind. Ferner ist eine Rückspülleitung 25 vorgesehen, an die ebenfalls alle Membraneinheiten 4a-4c angeschlossen sind. Zwischen den Leitungen 22, 24, 25 und den Leitungen 10a, 10b und 10c sind Querverbindungen 26, zweckmäßig mit Absperrorganen 27, vorgesehen. Im in Fig. 3 angedeuteten Betriebsablauf wird für die Membraneinheit 4a ein Test T durchgeführt. Gleichzeitig befindet sich die Membraneinheit 4b im Vorbereitungszustand **X.** Die Membraneinheit 4c führt ihren Produktionszyklus aus. Das produzierte Sterilwasser nimmt den Strömungsweg 28 zum Tank 11a. Zum Rückspülen beispielsweise der Membraneinheit 4a wurde der Strömungsweg 29 benutzt. Wird nun bei dem Test T eine Membranen-Funktionsstörung in der Membraneinheit 4a festgestellt, dann werden die Absperrorgane 27 so gesteuert, dass die Membraneinheiten 4c und 4b auf den dann sicheren Strömungsweg 30 (einem Teilabschnitt der Leitung 24) zum anderen Tank 11 b umgestellt werden, während der vorherige Strömungsweg 28 (gegebenenfalls auch der Rückspül-Strömungsweg 29) isoliert ist. Der Inhalt des Tanks 11a und der zugehörigen Leitungsabschnitte wird verworfen, während weiterhin Sterilwasser produziert und im Tank 11 b zwischengespeichert und erst zum Verbrauch freigegeben wird, falls der nächstfolgende Membranen-Funktionsfähigkeitstest einen Sterilitätsnachweis erbracht hat. Zusammengefasst lässt sich mit dem erfindungsgemäßen Verfahren und in der erfindungsgemäß ausgebildeten Filtrationsvorrichtung V der Vorteil der Membrantechnologie, d. h. der verringerte Kosten- und Energieaufwand, zur Sterilwasser-Produktion, aber auch zur Filtrierung bzw. Klärung mit Mikrofiltrationsmembranen insbesondere für Funktionen und Prozesse bei der Getränkeherstellung und Abfüll- oder Verpackungstechnik nutzen, und wird durch eine Online-Selbstüberwachung des Verfahrens und der Filtrations-Vorrichtung V sichergestellt, dass kein kontaminiertes Sterilwasser bzw. keine verunreinigte Flüssigkeit in den Verbrauch kommt. Dabei ist der Bubble-Point-Test eine kostengünstige und zuverlässige Vorgangsweise zum Erbringen des Sterilitätsnachweises, obwohl nicht ausgeschlossen sein soll, dass der Sterilitätsnachweis auf andere Weise erbracht wird.

**Patentansprüche**

1. Verfahren zum Herstellen von gefilterter Flüssigkeit, insbesondere von Sterilwasser, zum Verbrauch bei der Getränkeherstellung oder in der Abfüll- oder Verpackungstechnik, in einer Filtrationsvorrichtung (V) mit mindestens einer Membraneinheit (4a-4f) während jeweils eines durch Membran-Rückspülzyklen begrenzten Produktionszyklus, **dadurch gekennzeichnet, dass** im Produktionsablauf zumindest ein jeweiliges gefiltertes Produktionsflüssigkeitsvolumen eines Produktionszyklus vor Freigabe zum Verbrauch zwischengespeichert wird, bis für das zwischengespeicherte Produktionsflüssigkeitsvolumen ein Sterilitätsnachweis erbracht worden ist.

2. Verfahren nach Anspruch 1, **dadurch gekennzeichnet, dass** nach einem Rückspülzyklus einer Membraneinheit (4a-4f) für diese Membraneinheit ein Membranen-Funktionstest (T) durchgeführt wird, vorzugsweise ein Integritätstest, und dass zumindest das zwischengespeicherte Produktionsflüssigkeitsvolumen erst bei Vorliegen eines positiven Resultats des Membranen-Funktionstests (T) zum Verbrauch freigegeben, hingegen bei Nichterbringen des Sterilitätsnachweises verworfen wird.

3. Verfahren nach Anspruch 2, **dadurch gekennzeichnet, dass** der Membranen-Funktionstest (T) als Bubble-Point-Test mit unter Druck gesetzter Sterilluft zur Feststellung eines Membranenbruchs oder einer Membranen-Funktionsstörung durchgeführt wird und dass, vorzugsweise, bei dem Membranen-Funktionstest relativ zu einer Referenz eine Druck- und/oder Mengenmessung der Sterilluft über die Zeit durchgeführt wird, deren Druck unterhalb des Blasenbildungs-Druckwerts der Membranen eingestellt wird.

4. Verfahren nach Anspruch 1, **dadurch gekennzeichnet, dass** im Produktionsablauf mit mehreren parallelen, jeweils ein Produktionsflüssigkeitsvolumen aus einer Membraneinheit (4a-4f) ergebenden Produktionszyklen sequenziell die Sterilitätsnachweise für sämtliche Membraneinheiten (4a-4f) erbracht werden, und dass bis zum Erbringen des jeweiligen Sterilitätsnachweises sämtliche bis dahin angefallenen Produktionsflüssigkeitsvolumina zwischengespeichert werden.

5. Verfahren nach Anspruch 2, **dadurch gekennzeichnet, dass** bei einem einen Membranenbruch oder eine Membranen-Funktionsstörung bestätigenden Resultats eines Membranen-Funktionstests die in einem Zwischenspeicher (Z) oder einen Teilspeicher (11a, 11b) eines mindestens zwei Teilspeicher (11a, 11b) umfassenden Zwischenspeichers (Z) zwischengespeicherte Flüssigkeit verworfen, und, vorzugsweise, eine Reinigung des Zwischenspeichers (Z) bzw. des betroffenen Teilspeichers (11a oder 11 b) und zumindest einer Verrohrung bis zur funktionsgestörten Membraneinheit (4a-4f) durchgeführt werden.

6. Verfahren nach wenigstens einem der vorhergehenden Ansprüche, **dadurch gekennzeichnet, dass** der Produktionsablauf kontinuierlich oder in aufeinanderfolgenden Chargen intermittierend durchgeführt wird.

7. Verfahren nach wenigstens einem der vorhergehenden Ansprüche, **dadurch gekennzeichnet, dass** für den Produktionszyklus einer jeweiligen von mehreren parallelen Membraneinheiten (4a-4f) zumindest eine Zeitdauer eingestellt wird, während welcher in den weiteren Membraneinheiten sequenziell Rückspülzyklen durchführbar und Sterilitätsnachweise erbringbar sind.

8. Filtrationsvorrichtung (V) zum Herstellen gefilterter Flüssigkeiten, insbesondere von Sterilwasser, die in jeweils einem Produktionszyklus durch wenigstens eine Membraneinheit (4a-4f) gepumpt werden und zum Verbrauch, insbesondere bei der Getränkeherstellung oder in der Abfüll- oder Verpackungstechnik, bestimmt sind, **dadurch gekennzeichnet, dass** der jeweiligen Membraneinheit (4a-4f) ein Membranen-Rückspülsystem (18) und eine Sterilluft-Testvorrichtung (16) für Membranen-Funktionstests (T) zugeordnet und ein Zwischenspeicher (Z) nachgeschaltet sind, und dass der Zwischenspeicher (Z) ein Fassungsvermögen mindestens entsprechend dem bei einem Produktionszyklus der mindestens einen Membraneinheit (4a-4f) anfallenden Produktionsflüssigkeitsvolumen aufweist.

9. Filtrationsvorrichtung nach Anspruch 8, **dadurch gekennzeichnet, dass** mehrere, vorzugsweise parallel, an eine Pumpstation (1) angeschlossene und dem Zwischenspeicher (Z) parallel vorgeschaltete Membraneinheiten (4a-4f) vorgesehen sind, und dass das Fassungsvermögen des Zwischenspeichers (Z) zumindest der Summe der Produktionsflüssigkeitsvolumina der Membraneinheiten (4a-4e) während des Produktionszyklus einer jeweiligen Membraneinheit entspricht, vorzugsweise der Summe der Produktionsflüssigkeitsvolumina produzierender Membraneinheiten für die Zeitdauer des Produktionszyklus einer jeweiligen Membraneinheit zuzüglich der Zeitdauer eines Rückspülzyklus und eines in Verbindung mit dem Rückspülzyklus durchgeführten Membranen-Funktionstests.

10. Filtrationsvorrichtung nach Anspruch 8, **dadurch gekennzeichnet, dass** mit der Sterilluft-Testvorrichtung (16) jeweils mit unter vorbestimmtem Druck in die jeweilige Membraneinheit (4a-4f) eingeführter Sterilluft ein Bubble-Point-Test durchführbar ist.

11. Filtrationsvorrichtung nach Anspruch 8, **dadurch gekennzeichnet, dass** der Zwischenspeicher (Z) mindestens einen Tank (11, 11a, 11b) umfasst, vorzugsweise einen Tank mit unten liegendem Zulauf (12) und oben liegendem Ablauf (13) und Einbauten (14) wie zumindest Zulauftöpfen und/oder Leitblechen zur Flüssigkeits-Schichtung zwischen Zu- und Ablauf.

12. Filtrationsvorrichtung nach Anspruch 8, **dadurch gekennzeichnet, dass** der Zwischenspeicher (Z) mindestens eine Rohrschlange umfasst.

**13.** Filtrationsvorrichtung nach Anspruch 11 oder 12, **dadurch gekennzeichnet, dass** der Zwischenspeicher (Z) zumindest zwei als Teilspeicher wahlweise speisbare Tanks (11a, 11 b) und/oder Rohrschlangen umfasst, jeweils mit einem Fassungsvermögen zumindest entsprechend dem Produktionsflüssigkeitsvolumen einer Membraneinheit (4a-4f) oder der Summe der Produktionsvolumina produzierender Membraneinheiten (4a-4f) während eines Produktionszyklus.

**14.** Filtrationsvorrichtung nach Anspruch 9, **dadurch gekennzeichnet, dass** die Membraneinheiten (4a-4f) an eine gemeinsame einzige Pumpe oder Pumpstation (2) angeschlossen sind.

**15.** Filtrationsvorrichtung nach Anspruch 13, **dadurch gekennzeichnet, dass** bei einem mindestens zwei wahlweise speisbare Teilspeicher (11a, 11b) aufweisenden Zwischenspeicher (Z) für mehrere parallel produzierende Membraneinheiten (4a-4f) eine Mehrfachverrohrung, insbesondere Doppelverrohrung, zwischen den Membraneinheiten (4a-4f) und den Teilspeichern (11a, 11b) vorgesehen ist, mit gegenseitigen Querverbindungen (26) mit Umschaltorganen (27) zum Umschalten auf einen sicheren Strömungsweg (30) von nach einem einen Membranenbruch oder eine Membranen-Funktionsstörung bestätigenden Resultat eines Membranen-Funktionstests bei einer Membraneinheit (4a-4f) als sicher und nicht sicher identifizierten Strömungswegen (28, 30).

**16.** Filtrationsvorrichtung nach wenigstens einem der Ansprüche 8 bis 15, **dadurch gekennzeichnet, dass** eine Produktions-Steuer- und -Überwachungseinrichtung (CU) vorgesehen und zumindest an Funktionsüberwachungs-Sensoren (31) an oder in der jeweiligen Membraneinheit (4a-4f) angeschlossen ist.

FIG. 1

FIG. 2

FIG. 3

Europäisches Patentamt

European Patent Office

Office européen des brevets

**EUROPÄISCHER RECHERCHENBERICHT**

Nummer der Anmeldung

EP 11 17 8830

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 10 076260 A (MITSUBISHI RAYON CO; MITSUBISHI RAYON ENG) 24. März 1998 (1998-03-24) * Absätze [0006] - [0011], [0019]; Abbildung 1 * | 1-16 | INV. C02F1/44 B01D61/22 B01D65/02 B01D65/10 |
| X | JP 2004 209400 A (UERUSHII KK) 29. Juli 2004 (2004-07-29) * Absätze [0018] - [0022]; Abbildung 1 * | 1-16 | ADD. C02F103/02 |
| X | EP 0 655 418 A1 (OMNIUM TRAITEMENT VALORISA [FR]) 31. Mai 1995 (1995-05-31) * Spalte 11, Zeile 2 - Spalte 13, Zeile 31; Abbildung 1 * | 1-16 | |
| A | JP 62 140607 A (DAICEL CHEM) 24. Juni 1987 (1987-06-24) * Zusammenfassung * | 1-16 | |
| A | WO 2007/104797 A1 (SECCUA GMBH [DE]; HANK MICHAEL [DE]) 20. September 2007 (2007-09-20) * das ganze Dokument * | 1-16 | RECHERCHIERTE SACHGEBIETE (IPC) B01D C02F A23L A23C |
| A | GUO H ET AL: "Low-pressure membrane integrity tests for drinking water treatment: A review", WATER RESEARCH, ELSEVIER, AMSTERDAM, NL, Bd. 44, Nr. 1, 1. Januar 2010 (2010-01-01) , Seiten 41-57, XP026785428, ISSN: 0043-1354, DOI: 10.1016/J.WATRES.2009.09.032 [gefunden am 2009-09-24] * das ganze Dokument * | 1-16 | |

-/--

Der vorliegende Recherchenbericht wurde für alle Patentansprüche erstellt

| Recherchenort | Abschlußdatum der Recherche | Prüfer |
|---|---|---|
| Den Haag | 24. Januar 2012 | Liebig, Thomas |

Europäisches
Patentamt

European
Patent Office

Office européen
des brevets

# EUROPÄISCHER RECHERCHENBERICHT

**Nummer der Anmeldung**

EP 11 17 8830

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | BENNETT ET AL: "Maintaining the integrity of filtration systems", FILTRATION AND SEPARATION, ELSEVIER ADVANCED TECHNOLOGY, OXFORD, GB, Bd. 42, Nr. 1, 1. Januar 2005 (2005-01-01) , Seiten 30-33, XP005427792, ISSN: 0015-1882, DOI: 10.1016/S0015-1882(06)70843-6 * das ganze Dokument * ----- | 1-16 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| Den Haag | 24. Januar 2012 | Liebig, Thomas |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 11 17 8830

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-01-2012

| Im Recherchenbericht angeführtes Patentdokument | | Datum der Veröffentlichung | Mitglied(er) der Patentfamilie | | Datum der Veröffentlichung |
|---|---|---|---|---|---|
| JP 10076260 | A | 24-03-1998 | KEINE | | |
| JP 2004209400 | A | 29-07-2004 | KEINE | | |
| EP 0655418 | A1 | 31-05-1995 | CA | 2136943 A1 | 31-05-1995 |
| | | | DE | 69417691 D1 | 12-05-1999 |
| | | | DE | 69417691 T2 | 02-12-1999 |
| | | | DK | 655418 T3 | 03-07-2000 |
| | | | EP | 0655418 A1 | 31-05-1995 |
| | | | FR | 2713220 A1 | 09-06-1995 |
| | | | JP | 3755912 B2 | 15-03-2006 |
| | | | JP | 7256253 A | 09-10-1995 |
| | | | US | 5607593 A | 04-03-1997 |
| JP 62140607 | A | 24-06-1987 | JP | 1887761 C | 22-11-1994 |
| | | | JP | 6013088 B | 23-02-1994 |
| | | | JP | 62140607 A | 24-06-1987 |
| WO 2007104797 | A1 | 20-09-2007 | AT | 539811 T | 15-01-2012 |
| | | | DE | 102006012198 A1 | 27-09-2007 |
| | | | EP | 1998876 A1 | 10-12-2008 |
| | | | US | 2009218285 A1 | 03-09-2009 |
| | | | WO | 2007104797 A1 | 20-09-2007 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1189684 B
- US 2003015977 A